**Europäisches Patentamt**

**European Patent Office**

**Office européen des brevets**

(19)

(11) Veröffentlichungsnummer: **0 337 182**

**A2**

(12) # EUROPÄISCHE PATENTANMELDUNG

(21) Anmeldenummer: **89105419.9**

(22) Anmeldetag: **28.03.89**

(51) Int. Cl.⁴: **B23K 33/00 , B23K 26/00**

(30) Priorität: **14.04.88 DE 3812448**

(43) Veröffentlichungstag der Anmeldung:
**18.10.89 Patentblatt 89/42**

(84) Benannte Vertragsstaaten:
**ES FR GB IT SE**

(71) Anmelder: **Bayerische Motoren Werke
Aktiengesellschaft
Patentabteilung AJ-3 Postfach 40 02 40
Petuelring 130
D-8000 München 40(DE)**

(72) Erfinder: **Henn, Jochen
Norderneyerstrasse 11
D-8000 München 40(DE)**
Erfinder: **Hamed, Mustafa
Plinganserstrasse 42
D-8000 München 70(DE)**

(54) **Verbindungsbereich zweier beschichteter Dünnbleche.**

(57) Zwei durch Laserschweißen miteinander zu verbindende beschichtete Dünnbleche stoßen im Verbindungsbereich entlang der Schweißnaht mit unterschiedlichen Krümmungsradien aufeinander und sind beidseitig der Schweißnaht voneinander beabstandet. Auf diese Weise werden sog. Entgasungskammern zur Aufnahme der sich beim Schweißvorgang bildenden gasförmigen Beschichtungsstoffe gebildet.

EP 0 337 182 A2

Fig. 1

## Verbindungsbereich zweier beschichteter Dünnbleche.

Die Erfindung betrifft einen Verbindungsbereich zweier beschichteter Dünnbleche nach dem Oberbegriff des Anspruchs 1 und geht aus von der gattungsbildenden EP 0157913 A.

Jene Schrift erläutert ausführlich die Probleme, welche sich beim Laserschweißen beschichteter Dünnbleche einstellen. Da die Beschichtung zumeist einen niedrigeren Schmelzpunkt aufweist als das Material des Dünnbleches, gelangen die während des Schweißvorganges in den dampfförmigen Zustand übertretenden Beschichtungsstoffe in das flüssig gewordene Schweißbad. Als Folge stellt sich in der Schweißnaht eine starke Porenbildung ein. Derartige "verunreinigte" Schweißnähte können jedoch den gestellten Anforderungen nicht genügen. Als Abhilfemaßnahme schlägt die gattungsbildende Schrift vor, die beiden Dünnbleche voneinander beabstandet zu verschweißen. Über den zwischen den Blechen liegenden Luftspalt - dessen Dicke soll 0,1 bis 0,5 mm betragen -können dann die gasförmigen Beschichtungsstoffe entweichen.

Wenngleich sich mit jenem Lösungsvorschlag Porenbildungen in der Laserschweißnaht vermeiden lassen, so müssen hiermit doch zusätzliche Nachteile in Kauf genommen werden. Aufgrund des Abstandes zwischen den beiden Dünnblechen ist zur Erzielung einer sicheren Schweißnaht ein relativ energiereicher Laserstrahl erforderlich. Damit aber werden die eigentlichen Vorteile des Laserschweißens, welches als relativ energiearmes Schweißverfahren die zu verschweißenden Bleche nur im direkten Schweißnahtbereich erhitzt, wieder aufgehoben. Desweiteren ist es damit auch nicht mehr möglich, die Tiefe des Schweißbereiches in dem der Laserkanone abgewandten Dünnblech exakt einzustellen.

Aufgabe der Erfindung ist es, einen gattungsgemäßen Verbindungsbereich zweier beschichteter Dünnbleche so auszubilden, daß die Vorteile des Laserschweißens weiterhin voll genutzt werden können.

Diese Aufgabe wird durch die kennzeichnenden Merkmale des ersten Anspruchs gelöst, vorteilhafte Aus- und Weiterbildungen beschreiben die Unteransprüche.

Indem die beiden Dünnbleche entlang der Schweißnaht aufeinanderstoßen und beidseitig der Schweißnaht voneinander beabstandet sind, genügt weiterhin ein relativ energiearmer Laserstrahl zur sicheren Verbindung der beiden Bleche. In den Randzonen der Schweißnaht sind die beiden Dünnbleche voneinander beabstandet, und bilden somit einen ausreichenden Freiraum zur Aufnahme der gasförmigen Beschichtungsstoffe. Jener Freiraum kann als sogenannte Entgasungskammer bezeichnet werden. Wesentlich ist das weitere Merkmal, wonach die beiden Dünnbleche mit unterschiedlichen Krümmungsradien aufeinanderstoßen. Nur somit ist es nämlich möglich, eine ausreichend schmal verlaufende Schweißnaht zu erzielen, welche sich dann auch garantiert porenfrei ausbildet. Durch jenes Merkmal unterscheidet sich die vorliegende Erfindung wesentlich von dem aus der DE-PS 34 07 770 bekannt gewordenen Verfahren zum Verschweißen von Blechflanschen. Auch hier sind abseits der Laserschweißnaht die beiden verschweißten Blechflansche voneinander beabstandet. Dieser Abstand dient jedoch keineswegs zur Entgasung bzw. zur Aufnahme der dampfförmigen Beschichtungsstoffe, sondern ist als Angriffspunkt für eine Spannvorrichtung vorgesehen und soll dabei im sickenförmig ausgebildeten Schweißnahtbereich eine ausreichende Anpreßkraft zwischen den beiden Blechteilen gewährleisten. Auch um den darin gezeigten Behälter gasdicht zu gestalten, ist die den Schweißnahtbereich kennzeichnende Sicke dabei derart breit ausgebildet, daß sich beim Verschweißen beschichteter Blechflansche unweigerlich die oben erläuterte Porenbildung in der .Schweißnaht einstellen würde. Da jene Problematik in der genannten Schrift jedoch überhaupt nicht erwähnt ist, kann jener Schrift auch keine Anregung für die vorliegende Erfindung entnommen werden.

Ein nach Anspruch 2 im Verbindungsbereich im wesentlichen eben ausgebildetes Blech stellt einfachste Fertigungsvorgänge sicher. Der Erfindungsgedanke kommt auch dann voll zum Tragen, wenn lediglich eines der beiden Dünnbleche im Verbindungsbereich entlang der Schweißnaht gekrümmt ausgebildet ist. Unter die vorliegende Erfindung fällt desweiteren eine Ausbildung gemäß Anspruch 3, wenn nur ein einziges Blechstück mit seinem umgebördelten Randbereich verschweißt wird. Selbstverständlich kann auf jenem umgebördelten Randbereich ein weiteres mit der gleichen Laserschweißnaht verbundenes Dünnblech aufliegen, wobei ein abermals verschiedenartiger Krümmungsradius zur Bildung einer sogenannten Entgasungskammer bei Gewährleistung einer porenfreien sowie durch einen relativ energiearmen Laserstrahl erzeugbaren Schweißnaht vorgesehen ist.

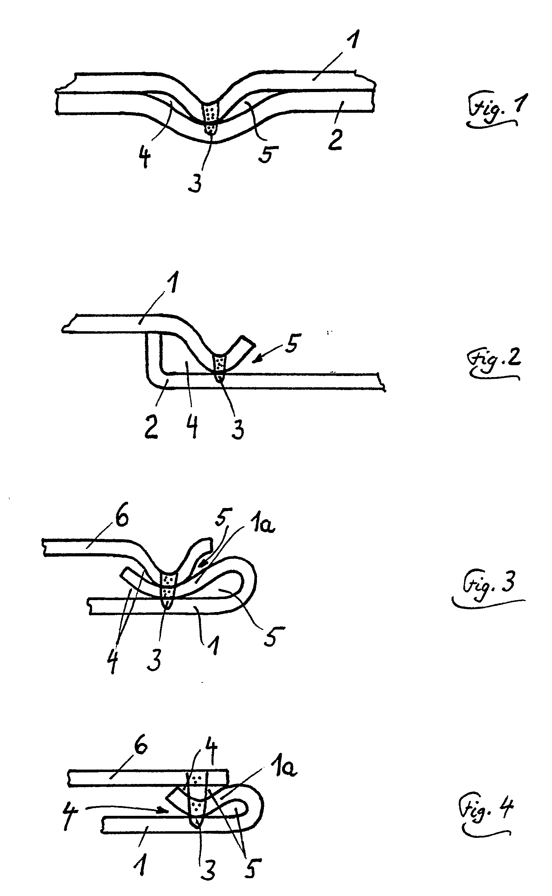

Im folgenden wird die vorliegende Erfindung anhand einiger in den Fig. 1 bis 4 prinzipiell dargestellter bevorzugter Ausführungsbeispiele nochmals erläutert.

Dargestellt ist jeweils der Verbindungsbereich zweier beschichteter, beispielsweise verzinkter Dünnbleche 1, 2 bzw. 1, 1a. Miteinander verbunden werden diese Bleche mittels einer mit 3 bezeichneten Laserschweißnaht. Um die sich während des Schweißvorganges bildenden Beschichtungsdämpfe nicht in die Schweißnaht eindringen zu lassen, sind beidseitig der längsverlaufenden Schweißnaht zur Aufnahme jener Dämpfe als Entgasungskammern 4, 5 bezeichnete Freiräume vorgesehen. Gebildet werden diese Kammern dadurch, daß im Verbindungsbereich der Laserschweißnaht 3 die beiden Dünnbleche 1, 2 mit unterschiedlichen Krümmungsradien aufeinanderstoßen. Das Merkmal der unterschiedlichen Krümmungsradien ist desweiteren wesentlich, um eine relativ schmale Laserschweißnaht 3 zu erzielen, an deren Randbereiche sich die Entgasungskammern 4, 5 direkt anschließen. Nur durch jene Maßnahme läßt es sich vermeiden, daß gasförmige Beschichtungsdämpfe in das während des Schweißvorganges flüssige Schweißbad eindringen und dort unerwünschte Poren bilden.

Fig. 1 zeigt ein allgemeines Ausführungsbeispiel gemäß Anspruch 1, Fig. 2 ist gemäß Anspruch 2 ausgebildet. Zur einfacheren Formgebung ist dabei das Dünnblech 2 im Verbindungsbereich der Laserschweißnaht 3 eben ausgebildet, weist somit also einen unendlich großen Krümmungsradius auf.

Die Fig. 3 und 4 zeigen ein Blechstück 1, welches mit seinem umgebördelten Randbereich 1a ebenfalls durch eine Laserschweißnaht 3 verbunden ist. Erfindungsgemäß weisen auch hierbei die "beiden" Dünnbelche 1, 1a im Verbin dungsbereich unterschiedliche Krümmungsradien auf. Dabei liegt auf dem umgebördelten Randbereich 1a jeweils ein weiteres Dünnblech 6 mit entlang der Schweißnaht gegenüber dem Randbereich 1a verschiedenartigen Krümmungsradius auf und wird durch die gemeinsame Laserschweißnaht 3 mit dem Dünnblech 1 verschweißt.

Jene gezeigten Verbindungsbereiche zweier beschichteter Dünnbleche stellen lediglich bevorzugte Ausführungsbeispiele dar; andere Anordnungen, welche unter den allgemeinen Erfindungsgedanken fallen, sind ebenso denkbar. Wesentlich ist es, daß in einem gattungsgemäßen Verbindungsbereich zweier beschichteter Dünnbleche die beiden Dünnbleche entlang der Schweißnaht mit unterschiedlichen Krümmungsradien aufeinanderstoßen und beidseitig der Schweißnaht voneinander beabstandet sind, um bei Beibehaltung aller Vorteile des Laserschweißens Freiräume (Entgasungskammern) zur Aufnahme gasförmiger Beschichtungsstoffe zu bilden.

## Ansprüche

1. Verbindungsbereich zweier beschichteter Dünnbleche mit einer Laserstrahl-Schweißnaht sowie einem Freiraum zur Aufnahme der sich beim Schweißvorgang bildenden Beschichtungsdämpfe, dadurch gekennzeichnet, daß die beiden Dünnbleche (1, 2) entlang der Schweißnaht (3) mit unterschiedlichen Krümmungsradien aufeinanderstoßen und beidseitig der Schweißnaht (3) voneinander beabstandet sind.

2. Verbindungsbereich nach Anspruch 1, dadurch gekennzeichnet, daß eines der beiden Bleche (2) im Verbindungsbereich entlang der Schweißnaht (3) einen unendlich großen Krümmungsradius aufweist.

3. Verbindungsbereich nach Anspruch 1 oder 2, dadurch gekennzeichnet, daß der Verbindungsbereich von einem Blechstück (1) sowie dessen umgebördeltem Randbereich (1a) gebildet wird.

4. Verbindungsbereich nach Anspruch 3, dadurch gekennzeichnet, daß auf dem umgebördelten Randbereich (1a) ein weiteres Dünnblech (6) mit entlang der Schweißnaht gegenüber dem Randbereich (1a) verschiedenartigen Krümmungsradius aufliegt.

Fig. 1

Fig. 2

Fig. 3

Fig. 4